(19) Europäisches Patentamt
European Patent Office
Office européen des brevets

(11) **EP 2 328 850 B1**

(12) **FASCICULE DE BREVET EUROPEEN**

(45) Date de publication et mention
de la délivrance du brevet:
**05.12.2012 Bulletin 2012/49**

(51) Int Cl.:
**C05D 3/02** *(2006.01)* **C05D 5/00** *(2006.01)*
**C05D 9/02** *(2006.01)*

(21) Numéro de dépôt: **09740399.2**

(22) Date de dépôt: **28.07.2009**

(86) Numéro de dépôt international:
**PCT/FR2009/051515**

(87) Numéro de publication internationale:
**WO 2010/012952 (04.02.2010 Gazette 2010/05)**

(54) **UTILISATION D'UNE COMPOSITION MINERALE SOLIDE POUR ACCROITRE LA FERTILITE D'UN SOL DE CULTURE OU DE PRAIRIE**

VERWENDUNG EINER FESTEN MINERALSTOFFZUSAMMENSETZUNG ZUR ERHÖHUNG DER FRUCHTBARKEIT EINES ACKER- ODER GRASSTEPPENBODENS

USE OF A SOLID MINERAL COMPOSITION FOR INCREASING THE FERTILITY OF A CROP SOIL OR OF A PRAIRIE SOIL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **28.07.2008 FR 0855169**

(43) Date de publication de la demande:
**08.06.2011 Bulletin 2011/23**

(73) Titulaire: **P. R. P. Holding**
**75015 Paris (FR)**

(72) Inventeurs:
• **MORA, Philippe**
**94210 La Varenne Saint Hilaire (FR)**
• **MIAMBI, Edouard**
**91190 Gif Sur Yvette (FR)**
• **ROY, Virginie**
**78000 Versailles (FR)**
• **GIUSTI, Stéphanie**
**94460 Valenton (FR)**
• **BLIN, Didier**
**77600 Bussy Saint Georges (FR)**
• **VEYRIER, Thibaut**
**58460 Corvol L'Orgueilleux (FR)**
• **DARIDON, Bruno**
**54220 Malzeville (FR)**

(74) Mandataire: **Catherine, Alain et al**
**Cabinet HARLE et PHELIP**
**14-16, rue Ballu**
**75009 Paris (FR)**

(56) Documents cités:
DE-A1-102005 031 397    DE-A1-102005 033 595
DE-C1- 4 021 416        US-A- 4 273 570
US-A- 5 041 153

EP 2 328 850 B1

**Description**

**Domaine de l'invention**

La présente invention se rapporte au domaine de l'agriculture et de l'horticulture, et plus précisément au domaine des compositions fertilisantes utilisées notamment en agriculture, horticulture, arboriculture ou en prairie d'élevage.

**Art antérieur**

L'utilisation de compositions organiques ou minérales qui sont dispersées à la surface des sols de culture afin d'en accroître la fertilité est bien connue dans l'état de la technique.

Ainsi, une pluralité de compositions fertilisantes organiques ou minérales sont connues et utilisées depuis très longtemps dans l'agriculture, l'horticulture et l'arboriculture.

Pour être fertile, un sol doit comprendre un équilibre optimal de constituants organiques et de constituants minéraux.

Il n'existe pas aujourd'hui de définition des caractéristiques permettant de qualifier de manière univoque la fertilité d'un sol.

Toutefois, une mesure de l'activité biologique des organismes animaux, des organismes végétaux et des micro-organismes contenus dans un sol est prise en compte de manière croissante afin de matérialiser la capacité de régénération du sol, qui est en relation avec ses propriétés de fertilité. On peut citer par exemple des tests de fertilité d'un sol basés sur la mesure de la production de dioxyde de carbone par un échantillon représentatif dudit sol.

Selon d'autres études, la qualité d'un sol, et donc ses propriétés de fertilité, sont, au moins en partie, liées à l'activité enzymatique dudit sol, qui reflète notamment son activité microbienne.

L'étude de l'impact des modes de fertilisation sur la microflore et sur les activités enzymatiques du sol est une approche classique pour les matières fertilisantes organiques (compost, fumier, lisier, paille, engrais verts,...) puisque ces matières constituent une source directe de nutriments, sources de carbone et d'azote pour les microorganismes du sol.

Certains travaux montrent que la microflore des sols agricoles est moindre sur les plans quantitatifs et qualitatifs que dans les sols forestiers originels correspondants.

L'étude de la microflore du sol peut être réalisée par différentes méthodes, qui englobent l'extraction totale par fumigation-extraction, la mesure de l'activité respiratoire ou minéralisante globale du sol, la cytométrie en flux, l'extraction et la culture de la microflore totale revivifiable, l'analyse de marqueurs spécifiques de certaines populations telles que les acides gras, les stérols tel que l'ergosterol, les profils métaboliques en microplaques, l'analyse d'activités enzymatiques extraites du sol, ou encore les techniques plus récentes telles que l'extraction des acides nucléiques totaux du sol (métagénome) puis l'amplification spécifique des gènes codant les ARN ribosomiques (16S pour les bactéries ou 18S pour les champignons) par la technique de la PCR (Polymerase Chain Reaction), suivie d'un analyse par DGGE (Denaturing Gradient Gel Electrophoresis) des fragments amplifiés.

Il est considéré communément dans l'art antérieur que les activités enzymatiques peuvent constituer un indice important de l'activité biologique d'un sol, du fait que les réactions enzymatiques sont impliquées dans la dynamique de recyclage des éléments nutritifs et dans le transfert d'énergie vers les organismes végétaux multicellulaires.

Il est admis que les réactions enzymatiques sont étroitement associées à la qualité de fertilité d'un sol, du fait que les réactions enzymatiques réalisent la conversion de formes non métabolisables de certains nutriments en des formes directement assimilables par les plantes et par la biomasse microbienne. En particulier, les enzymes du sol participent à la décomposition et à la synthèse de substances organiques importantes pour la croissance des végétaux, qui ne sont pas synthétisées par les végétaux eux-mêmes.

En d'autres termes, l'activité enzymatique reflète l'intensité et la nature des processus biochimiques qui se réalisent au sein de la matrice du sol. De ce fait, l'activité enzymatique constitue un indicateur de la capacité biologique d'un sol à réaliser les processus biochimiques qui sont importants pour le maintien de ses propriétés de fertilité.

Pour fertiliser les sols, l'ajout de matière organique exogène (lisier, compost, fumier, boue) apporte de la biodiversité à court et moyen terme, mais la composition de la microflore semble réverser vers une « composition d'équilibre » initiale après une période de plusieurs semaines ou mois suivant l'apport du fertilisant organique (Plassart, P., ISME 11th International Symposium on Microbial Ecology, August 20-25, 2006, Vienna, Austria et al. 2006). Il existe de nombreux travaux relatifs à la microflore et à la dynamique de décomposition des matières organiques apportées au sol ou encore sur les boues issues de déchets organiques urbains riches en métaux lourds

Les travaux antérieurs publiés qui concernent les effets des matières fertilisantes minérales sur la microflore et sur les activités enzymatiques du sol sont beaucoup plus rares et les études disponibles sont surtout centrées sur les fertilisants azotés (Enwall, K. et al., Applied and Environmental Microbiology 2005, 71, 12, 8335-8343), sur l'impact des métaux lourds (Gremion, F., Thèse No. 2862, Ecole Polytechnique Fédérale de Lausanne, 2003), sur les conséquences de doses d'oligoéléments accumulées dans les sols agricoles par une fertilisation soutenue et fréquente, comme dans le cas du cuivre qui est et a été très utilisé dans les formulation phytosanitaires, notamment sur la vigne. On peut aussi citer certains travaux relatifs à l'ajout de composés minéraux tels que le Gypse et la ferrihydrite dont l'impact a été évalué sur les populations de méthanogènes dans le sol de rizières (Lueders, T. et al. Applied and Environmental Microbiology 2002, 68, 5, 2484-2494).

Il existe toutefois un besoin constant dans l'état de la technique pour des compositions destinées à maintenir ou accroître la fertilité d'un sol, qui possèdent des propriétés avantageuses sur l'activité enzymatique dudit sol.

## Résumé de l'invention

La présente invention a pour objet l'utilisation d'une composition minérale solide comprenant la formule (I) suivante :

| | |
|---|---|
| - Carbonate de calcium | de 4,58% à 77,8% |
| - Dolomie | de 3,85% à 69,29% |
| - Chlorure se sodium | de 5,7% à 12,4% |
| - Lignosulfate | de 4,25% à 8,49% |
| - Sulfate de potassium | de 0,37% à 2,44% |
| - Oxyde magnésium | de 0,01% à 0,07% |
| - Soufre élémentaire | de 0,009% à 0,066% |

les pourcentages ci-dessus consistant en les pourcentages en poids de chacun des composés, par rapport au poids total de matière sèche de ladite composition minérale,

pour accroître la fertilité d'un sol en provoquant l'augmentation d'au moins une activité enzymatique contenue dans ledit sol, choisie parmi (i) la phosphatase , (ii) la $\beta$-xylosidase, (iii) l'$\alpha$-glucosidase et (iv) la $\beta$-glucosidase.

## Description des figures

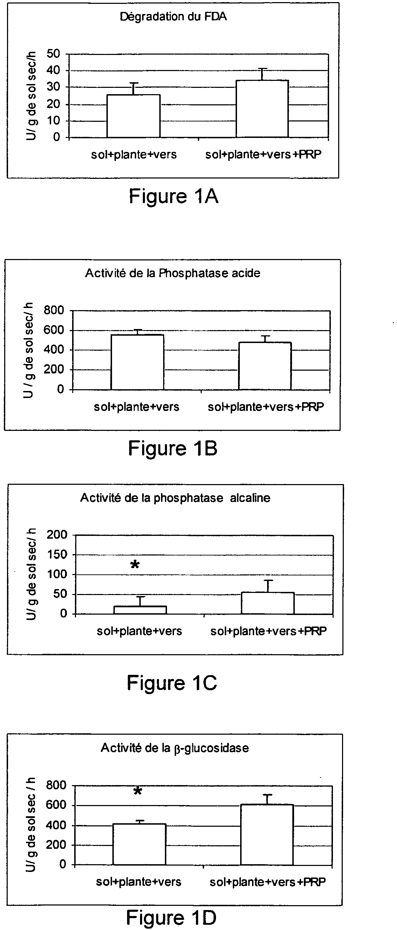

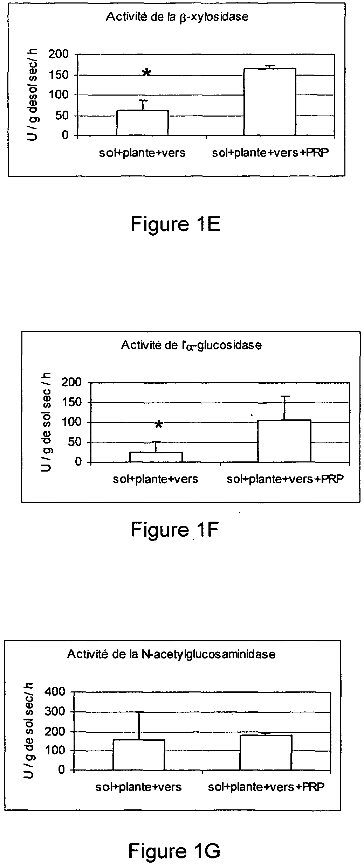

La **Figure 1** illustre les résultats de mesure des activités enzymatiques de divers sols. Sur les figures 1A à 1G, sont illustrées les mesures de diverses activités enzymatiques d'un sol avec couverture végétale et vers de terre, respectivement en l'absence de la composition minérale de formule (I) (barre de gauche) et avec traitement par la composition minérale de formule (I) (barre de droite)., En ordonnées, l'activité enzymatique est exprimée en Unité d'activité par gramme de sol sec et par heure. La Figure 1A illustre la mesure de l'activité enzymatique globale La figure 1B illustre la mesure de l'activité enzymatique phosphatase acide. La figure 1C illustre la mesure de l'activité enzymatique phosphatase alcaline. La figure 1D illustre la mesure de l'activité enzymatique $\beta$-glucosidase. La figure 1E illustre la mesure de l'activité enzymatique $\beta$-xylosidase. La figure 1F illustre la mesure de l'activité enzymatique $\alpha$-glucosidase. La figure 1G illustre la mesure de l'activité enzymatique N-acétyl-glucosaminidase.

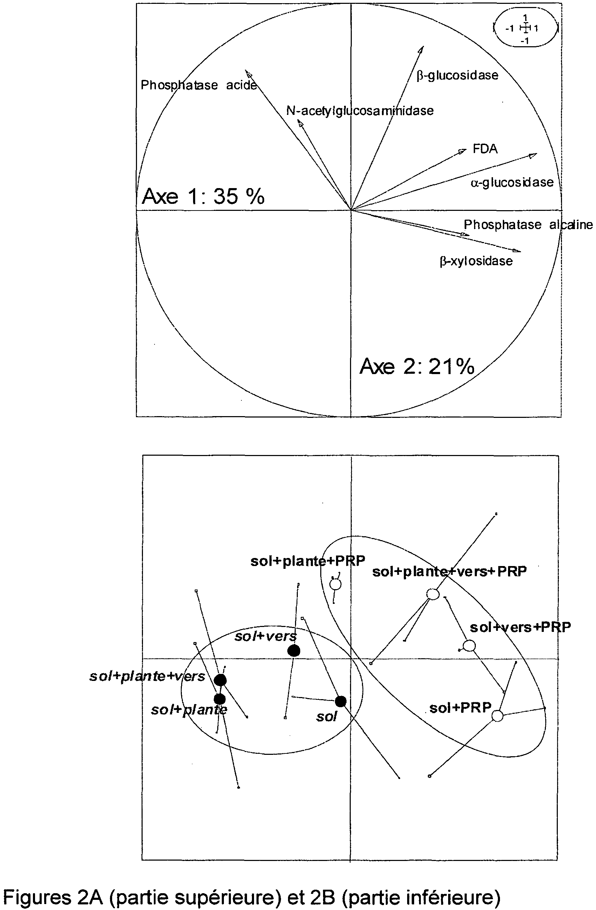

La **Figure 2A** représente le cercle des corrélations des activités enzymatiques mesurées.

La **Figure 2B** représente la projection des objets (les différents microcosmes) sur les axes 1 et 2 de la Figure 2A

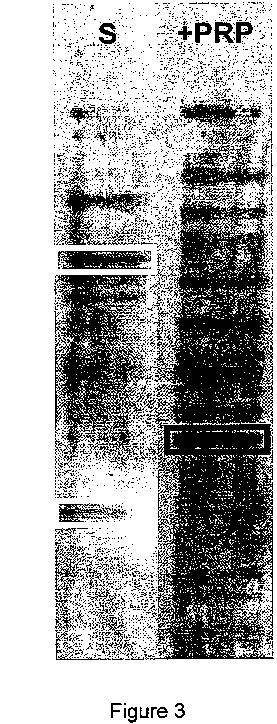

La **Figure 3** représente un cliché d'un gel d'électrophorèse sur gel en gradient dénaturant (DGGE). Piste de gauche : Sol sans couverture végétale et sans vers de terre. Piste de droite : Le même sol traité avec la composition minérale de formule (I).

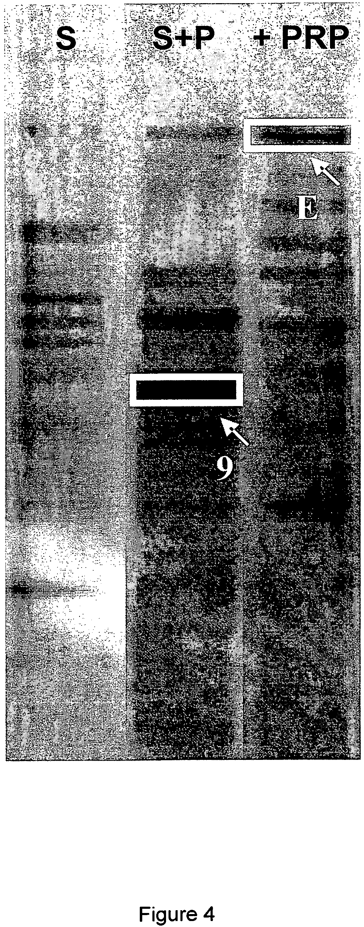

La **Figure 4** représente un cliché d'un gel d'électrophorèse sur gel en gradient dénaturant (DGGE). Piste de gauche : Sol sans couverture végétale et sans vers de terre. Piste médiane : Sol comprenant une couverture végétale sans vers de terre. Piste de droite : Le même sol comprenant une couverture végétale sans vers de terre, traité avec la composition minérale de formule (I).

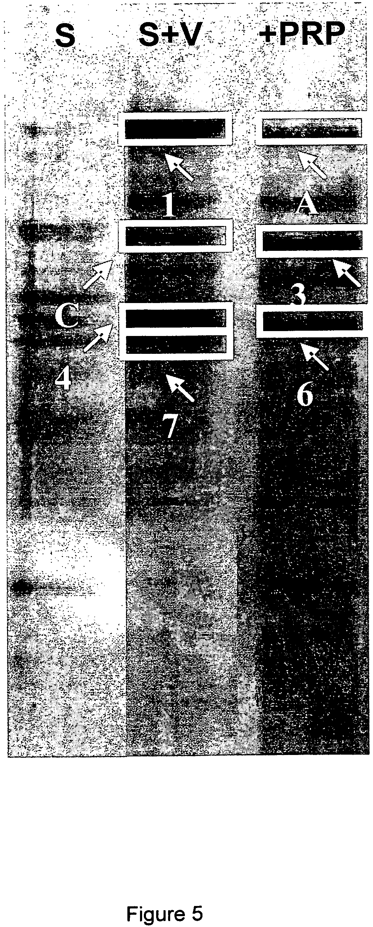

La **Figure 5** représente un cliché d'un gel d'électrophorèse sur gel en gradient dénaturant (DGGE). Piste de gauche : Sol sans couverture végétale et sans vers de terre. Piste médiane : Sol sans couverture végétale et comprenant des vers de terre. Piste de droite : Le même sol sans couverture végétale et comprenant des vers de terre, traité avec la composition minérale de formule (I).

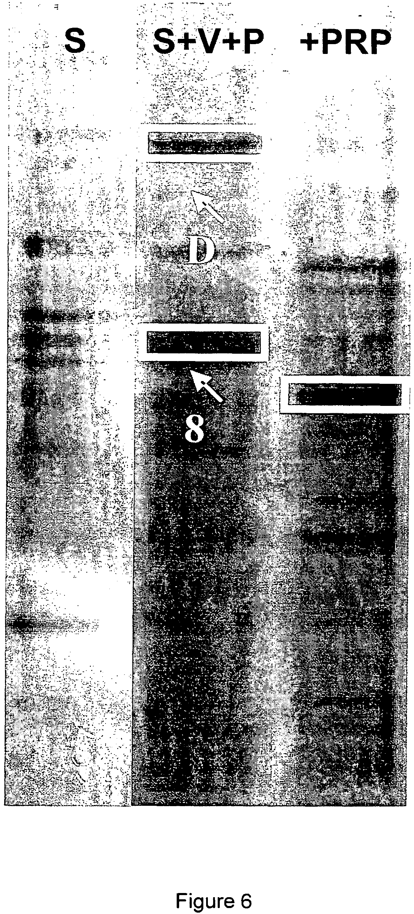

La **Figure 6** représente un cliché d'un gel d'électrophorèse sur gel en gradient dénaturant (DGGE). Piste de gauche : Sol sans couverture végétale et sans vers de terre. Piste médiane : Sol comprenant une couverture végétale et comprenant des vers de terre. Piste de droite : Le même sol comprenant une couverture végétale et des vers de terre, traité avec la composition minérale de formule (I).

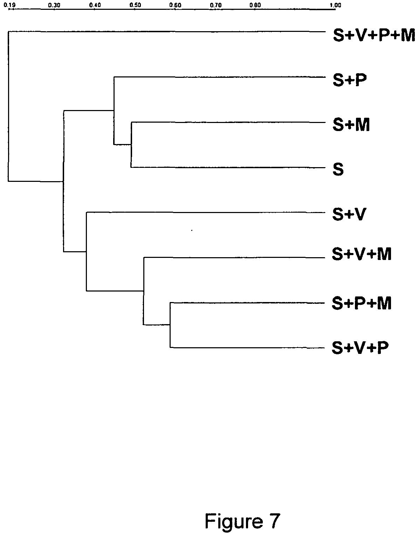

La **Figure 7** représente un dendrogramme de similitudes des profils de populations bactériennes retrouvées dans les différents sols testés, réalisé sur la base des profils de bandes de migration en DGGE qui sont représentés sur les figures 3 à 6.

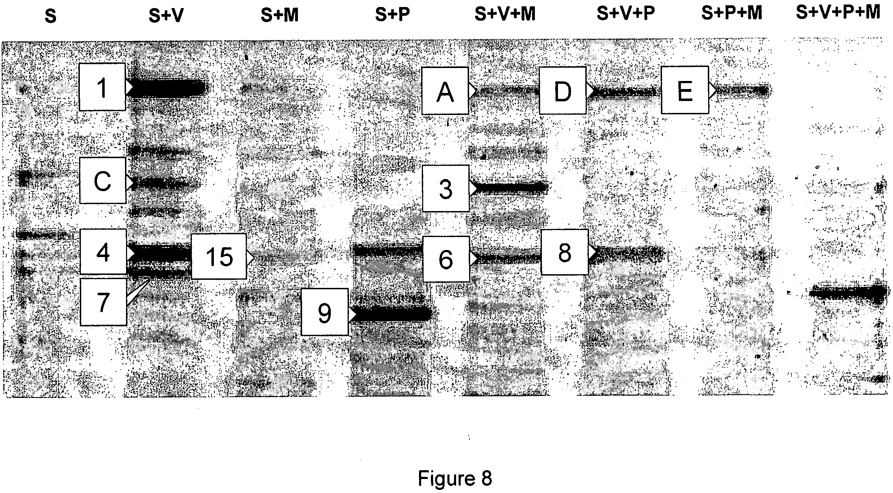

La **Figure 8** représente un cliché d'un gel d'électrophorèse sur gel en gradient dénaturant (DGGE). Piste « S » : Sol sans couverture végétale et sans ver de terre. Piste « S+V » : Sol « S » sans couverture végétale et comprenant des vers de terre. Piste « S+M » : Sol « S » traité avec la composition minérale de formule (I). Piste « S+P » : Sol « S » avec couverture végétale et sans vers de terre. Piste « S+V+M » : Sol « S+V » traité avec la composition minérale de formule (I). Piste « S+V+P » : sol «S » avec couverture végétale et comprenant des vers de terre. Piste « S+P+M " : sol « S+P » traité avec la composition minérale de formule (I). Piste « S+V+P+M » : sol « S+V+P » traité avec la composition minérale de formule (I).

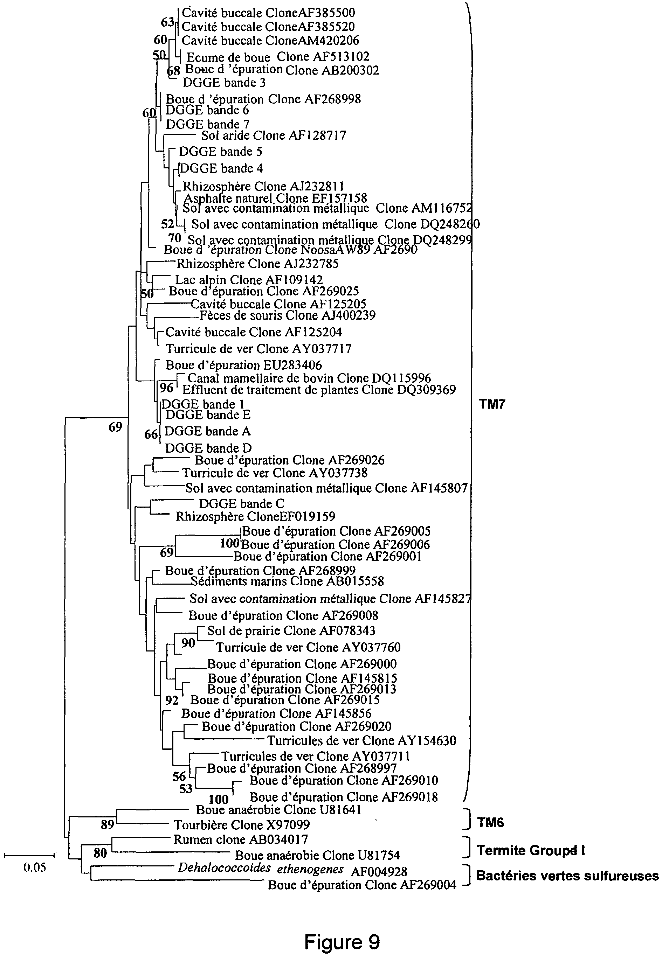

La **Figure 9** représente une reconstruction phylogénétique de la division TM7 basée sur l'ADNr 16S, par la méthode du Neighbor Joining, incluant les groupes bactériens séquencés à partir de certaines bandes de migration du gel DGGE représenté sur la Figure 8 et les séquences rapatriées à partir des banques de données.

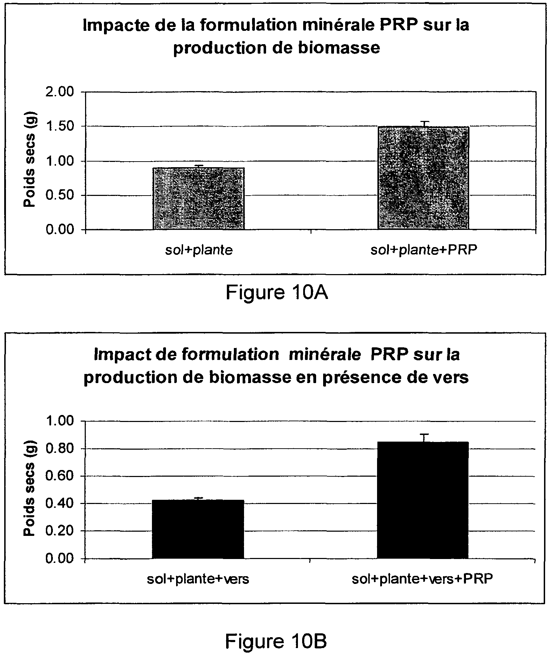

La **Figure 10** illustre l'effet de la composition minérale de formule (I) sur la production de la biomasse végétale. En ordonnées : mesure de la production de la biomasse végétale, exprimée en grammes de poids sec. La Figure 10A illustre la comparaison de production de biomasse végétale par (i) un sol avec couverture végétale et sans vers de terre (barre de gauche) et (ii) le même sol traité avec la composition minérale de formule (I). La Figure 10B illustre la comparaison de production de biomasse végétale par (i) un sol avec couverture végétale et comprenant des vers de terre (barre de gauche) et (ii) le même sol traité avec la composition minérale de formule (I).

## Description détaillée de l'invention

On a montré selon l'invention que l'ajout d'une composition minérale spécifique à un sol provoque une modification importante du profil des activités enzymatiques dudit sol et accroît sa fertilité.

En particulier, il a été montré selon l'invention que l'ajout de ladite composition minérale spécifique à un sol provoque une augmentation de l'activité de certaines enzymes telles que la phosphatase, la β-xylosidase, l'α-glucosidase et la β-glucosidase, qui sont connues comme étant importantes pour les propriétés de fertilité.

Ainsi, la présente invention concerne l'utilisation d'une composition minérale solide comprenant la formule (I) suivante :

| | |
|---|---|
| - Carbonate de calcium | de 4,58% à 77,8% |
| - Dolomie | de 3,85% à 69,29% |
| - Chlorure de sodium | de 5,7% à 12,4% |
| - Lignosulfate | de 4,25% à 8,49% |
| - Sulfate de potassium | de 0,37% à 2,44% |
| - Oxyde magnésium | de 0,01% à 0,07% |
| - Soufre élémentaire | de 0,009% à 0,066% |

les pourcentages ci-dessus consistant en les pourcentages en poids de chacun des composés, par rapport au poids total de matière sèche de ladite composition minérale,
pour accroître la fertilité d'un sol en provoquant l'augmentation d'au moins une activité enzymatique contenue dans ledit sol, choisie parmi (i) la phosphatase alcaline, (ii) la β-xylosidase, (iii) l'α-glucosidase et (iv) la β-glucosidase.

De préférence, la composition minérale solide ci-dessus comprend également une combinaison d'un ou plusieurs composés additionnels choisis parmi le bicarbonate de sodium, le sulfate de fer, le sulfate de manganèse, l'oxyde de zinc, l'iodure de potassium, le sulfate de cuivre et l'acide borique.

Préférentiellement, le ou les composés additionnels ci-dessus sont présents dans la composition minérale dans les quantités suivantes :

- de 0,007% à 0,158% de bicarbonate de sodium,
- de 0,0009% à 0,0434% de sulfate de fer,
- de 0,004% à 0,040% de sulfate de manganèse,
- de 0,0006% à 0,0040% d'oxyde de zinc,
- de 0,0004% à 0,0032% d'iodure de potassium,
- de 0,0002% à 0,0040% de sulfate de cuivre, et
- de 0,0006% à 0,0040% d'acide borique ,

les pourcentages ci-dessus consistant en les pourcentages en poids de chacun des composés, par rapport au poids total de matière sèche de ladite composition minérale.

Une composition minérale préférée qui est utilisée selon l'invention comprend la constitution suivante :

- 45,78% de carbonate de calcium,
- 38,49% de dolomie,
- 9,52% de chlorure de sodium,
- 5,66% de lignosulfate,
- 0,49% de sulfate de potassium,
- 0,014 d'oxyde de magnésium,
- 0,015% de soufre élémentaire, et
- les quantités appropriées d'un composé ou d'une combinaison d'au moins deux composés choisis parmi le bicarbonate de sodium, le sulfate de fer, le sulfate de manganèse, l'oxyde de zinc, l'iodure de potassium, le sulfate de cuivre et l'acide borique, de manière à ce que ladite composition minérale comprenne 100% en poids de constituants,

les pourcentages ci-dessus consistant en les pourcentages en poids de chacun des composés, par rapport au poids total de matière sèche de ladite composition minérale.

Préférentiellement, pour fertiliser un sol, on ajoute la composition minérale de formule (I) à raison d'une quantité d'au moins 0,01 Kgs par $m^2$ jusqu'à 0,10 kg/$m^2$.

Selon un autre aspect, la présente invention est également relative à un procédé pour fertiliser un sol comprenant au moins une étape au cours de laquelle on ajoute audit sol une quantité de composition minérale de formule (I) d'au moins 0,02 à 0,04 Kg par $m^2$

En général, la composition minérale de formule (I), qui est une composition solide qui se présente avantageusement sous la forme de granulats, est ajoutée au sol à fertiliser simplement par dispersion, au-dessus du sol à traiter.

La phosphatase, qui catalyse l'hydrolyse des liaisons phospho-esters, produit la libération de phosphate inorganique qui peut ensuite être utilisé comme métabolite par les plantes. Il est admis que cette enzyme joue un rôle critique dans les cycles métaboliques du phosphate et influe sur la croissance des plantes. Ainsi, plus l'activité phosphatase d'un sol est grande, en particulier l'activité phosphatase alcaline d'un sol, et plus le sol possède une capacité accrue à favoriser la croissance de plantes même lorsque la teneur dudit sol en phosphate inorganique est réduite.

La β-xylosidase, qui intervient dans l'hydrolyse du xylane (hémicellulose) permet de fournir à la microflore du sol des composés nutritifs qui une fois minéralisés sont assimilés par la plante. L'activité β-xylosidase intervient dans les dernières étapes de dégradation du xylane, qui est l'un des composants majeurs de la paroi des cellules végétales et qui est retrouvé dans les débris végétaux contenus dans les sols.

L'activité β-glucosidase est considérée comme un indicateur de la qualité des sols. L'activité β-glucosidase, qui intervient dans l'hydrolyse de la cellulose, est importante pour les propriétés de fertilité d'un sol car la cellulose est quantitativement le composé le plus abondant retrouvé dans les sols. La β-glucosidase joue un rôle important dans les sols car cette enzyme est responsable de l'hydrolyse de β-glucosides variés présents dans les débris végétaux en décomposition retrouvés dans les sols. La dégradation de la cellulose est considérée comme un des processus majeurs du cycle de carbone dans le sol. La décomposition microbienne de la cellulose dans le sol est un processus complexe faisant intervenir au moins trois types d'enzymes, respectivement les endo-β-1,4-glucanases, les exo-β-1,4-glucanases et les β-1,4-glucosidases. L'activité β-1,4-glucosidase hydrolyse les produits de dégradation de la cellulose, tel que le disaccharide (cellobiose), en molécules de glucose directement assimilables par les microorganismes du sol. Ainsi, la décomposition de la cellulose contenue dans les sols n'est complète qu'en présence d'activité β-glucosidase. L'activité β-glucosidase est considérée comme un indicateur du renouvellement (« turnover ») de la biomasse végétale.

L'activité α-glucosidase hydrolyse les oligosaccharides issus de la dégradation de l'amidon présent dans les débris végétaux en décomposition contenus dans les sols en générant le D-glucose comme produit final, qui est directement assimilable par les microorganismes du sol..

Au sens de l'invention, on entend par « sol » plus particulièrement un sol de culture ou un sol de prairie.

Les sols de culture englobent les sols cultivés qui sont utilisés dans tous les domaines de l'agriculture végétale, y compris pour l'horticulture, l'arboriculture et la culture de la vigne.

Les sols de prairie englobent les sols non cultivés qui sont utilisés notamment pour fournir du matériel végétal frais ou séché pour l'alimentation des animaux, en particulier du bétail.

Globalement, les sols sont généralement constitués d'une combinaison d'éléments minéraux et d'éléments organiques, comprenant des proportions variables de sable, d'argile(s), de limon(s), de calcaire de toute grosseur, d'humus, de débris organiques, de micro-organismes, d'air et d'eau.

Par « activité enzymatique », on entend l'activité catalytique de transformation d'un composé substrat donné en un produit final de la réaction catalytique.

La mesure des activités enzymatiques des types (i) phosphatase, (ii) β-xylosidase, (iii) α-glucosidase et β-glucosidase peut être réalisée selon toute technique bien connue de l'homme du métier.

Avantageusement, un petit échantillon de sol est mis en suspension dans un volume adapté d'eau distillée afin de réaliser un extrait brut qui est ensuite utilisé pour les dosages enzymatiques spécifiques.

Les dosages enzymatiques peuvent être réalisés de manière conventionnelle, par incubation d'une fraction aliquote de l'extrait brut de terre à tester avec le substrat de l'activité enzymatique pendant une durée déterminée, puis, après arrêt de la réaction enzymatique, quantification du produit de la réaction catalytique, en général par lecture au spectrophotomètre.

A titre illustratif, on peut utiliser les substrats suivants :

- pour l'activité phosphatase : du sel di- ou tri-phosphate de 4-nitrophényle,
- pour l'activité $\beta$-glucosidase : du 4-nitrophényl $\beta$-D-glucopyranoside,
- pour l'activité $\beta$-xylosidase : le 4-nitrophényl $\beta$-xyloside, et
- pour l'activité $\alpha$-glucosidase : le 4-nitrophényl $\alpha$-glucoside.

Pour tester l'activité N-acétyl-glucosaminidase, on peut utiliser le 4-nitrophényl N-acétyl-$\beta$-D-glucosaminide.

Lorsque les substrats ci-dessus sont utilisés, la quantification du produit final de la réaction catalytique est réalisée par spectrophotométrie avec détermination de la densité optique (D.O.) à la longueur d'onde de 405 nanomètres.

On a montré selon l'invention que l'ajout d'une composition minérale de formule (I) à un sol (i) comprenant une couverture végétale en l'absence de lombrics ou à un sol (ii) comprenant une couverture végétale et comprenant des lombrics, induit une augmentation significative de l'activité phosphatase alcaline. On a ainsi montré que, avec l'ajout de la composition minérale de formule (I) au type de sol (i) ci-dessus, on retrouve une activité phosphatase alcaline dix fois supérieure à l'activité phosphatase alcaline déterminée pour un sol de type (i) dépourvu de la composition de formule (I). Avec un sol du type (ii) ci-dessus, l'activité phosphatase alcaline, est généralement augmentée d'un facteur d'au moins deux fois, par rapport à l'activité phosphatase déterminée pour un sol de type (ii) de même composition mais dépourvu de la composition minérale de formule (I)..

On a aussi montré selon l'invention que l'ajout d'une composition minérale de formule (I) à un sol (i) comprenant une couverture végétale en l'absence de lombrics, à un sol (ii) comprenant une couverture végétale et comprenant des lombrics ou à un sol (iii) sans couverture végétale et comprenant des lombrics, induit une augmentation significative de l'activité $\beta$-xylosidase. On a ainsi montré que, avec l'ajout de la composition minérale de formule (I) au type de sol (i), on retrouve une activité $\beta$-xylosidase au moins trois fois supérieure à l'activité $\beta$-xylosidase déterminée pour un sol de type (i) dépourvu de la composition minérale de formule (I). On a également montré que l'activité de la $\beta$-xylosidase déterminée pour un sol de type (ii) après ajout de la composition minérale de formule (I) est au moins deux fois supérieures à l'activité $\beta$-xylosidase déterminée pour un sol de type (ii) dépourvu de la composition minérale de formule (I). Avec un sol du type (iii) ci-dessus, l'activité $\beta$-xylosidase, est généralement augmentée d'un facteur d'au moins cinq fois supérieure, à l'activité $\beta$-xylosidase déterminée pour un sol du type (iii) dépourvu de la composition minérale de formule (I).

On a aussi montré selon l'invention que l'ajout d'une composition minérale de formule (I) à un sol (i) avec couverture végétale et sans des lombrics, (ii) à un sol comprenant une couverture végétale et comprenant des lombrics ou (iii) à un sol sans couverture végétale et comprenant des lombrics, induit une augmentation significative de l'activité $\alpha$-glucosidase quatre fois supérieure, à l'activité $\alpha$-glucosidase, déterminée pour un sol de types (i), (ii), (iii) dépourvus de la composition minérale de formule (I).

On a aussi montré selon l'invention que l'ajout d'une composition minérale de formule (I) à un sol (ii) comprenant une couverture végétale et comprenant des lombrics, induit une augmentation significative de l'activité $\alpha$-glucosidase au moins une fois et demi supérieure à l'activité $\beta$-glucosidase, déterminée pour un sol (ii) dépourvu de la composition minérale de formule (I)..

En référence à la Figure 2B, on a montré selon l'invention que la composition de formule (I) exerce un effet statistiquement significatif sur l'augmentation des activités enzymatiques (i) à (iv) définies ci-dessus, quel que soit le type de sol qui est traité.

Sans vouloir être lié par une quelconque théorie, le demandeur pense que l'accroissement du potentiel enzymatique du sol qui est provoqué par l'ajout de la composition de formule (I) permet d'améliorer les processus telluriques de minéralisation de la matière organique.

Comme cela est décrit ci-dessus, la composition minérale de formule (I) induit, au niveau de l'activité enzymatique, principalement l'augmentation d'activités enzymatiques dites « mineures » du point de vue de leur rapport quantitatif à l'activité enzymatique globale du sol, telles que la $\beta$-xylosidase, l'$\alpha$-glucosidase ou encore la phosphatase alcaline. On rappelle toutefois que la composition minérale de formule (I) induit aussi l'augmentation d'activités enzymatiques dites « majeures », du point de vue de leur rapport quantitatif à l'activité enzymatique globale du sol, telle que la $\beta$-glucosidase.

Sans vouloir être lié par une quelconque théorie, le demandeur pense que la composition minérale de formule (I) provoque un « rééquilibrage » du profil enzymatique du sol par accroissement de certaines activités enzymatiques, sans simultanément provoquer une réduction significative des autres activités enzymatiques.

De plus, les résultats obtenus selon l'invention montrent que l'effet de la composition de formule (I) sur les activités enzymatiques varie selon les types de sol auxquels cette formulation est ajoutée, ce qui montre que l'effet de cette formulation sur les activités enzymatiques dépend de la composition qualitative et/ou quantitative en organismes vivants, notamment de la flore et de la faune contenues dans le sol traité, y compris les micro-organismes, en particulier les micro-organismes bactériens et fongiques. Ces résultats montrent que la composition minérale de formule (I) possède un effet de stimulation des activités biologiques des sols.

Comme cela est montré dans les exemples, les augmentations qui sont observées pour chacune des activités enzymatiques (i) phosphatase alcaline, (ii) β-xylosidase, (iii) α-glucosidase et (iv) β-glucosidase dans les sols des types (i), (ii) et (iii) en présence de la composition minérale de formule (I) ne signifie pas que l'ajout de la composition de formule (I) provoque une augmentation générale des activités enzymatiques des sols traités. Ainsi, on montre que l'activité enzymatique globale d'un sol traité avec une composition minérale de formule (I) est sensiblement identique à l'activité enzymatique globale du même sol non traité avec la composition minérale de formule (I). L'activité enzymatique globale d'un sol peut être déterminée par quantification de la dégradation non spécifique du substrat de fluorescéine diacétate (FDA).

En revanche, l'accroissement des propriétés de fertilité d'un sol traité avec une composition de formule (I), du fait de l'augmentation spécifique des activités enzymatiques (i) à (iv) ci-dessus est illustrée par le fait que l'ajout d'une composition de formule (I) induit un accroissement de la production de biomasse végétale aérienne et racinaire d'au moins 1,5 fois, par rapport à un sol identique mais non traité avec la composition de formule (I). Ainsi, on a montré que l'ajout d'une composition de formule (I) à un sol (i) comprenant une couverture végétale en l'absence de lombrics induit un accroissement de la production de biomasse végétale aérienne et racinaire d'au moins 1,5 fois, telle que calculée sur la base du poids sec de biomasse végétale après récolte. On a aussi montré que l'ajout d'une composition de formule (I) à un sol (ii) comprenant une couverture végétale et comprenant des lombrics induit un accroissement de la production de biomasse végétale aérienne et racinaire d'au moins deux fois, telle que calculée sur la base du poids sec de biomasse après récolte.

De manière générale, le demandeur a observé que l'accroissement de la qualité des sols qui est obtenu par l'ajout de la composition minérale de formule (I) est illustré par un accroissement de la biomasse végétale aérienne et racinaire pour la culture de la plupart des plantes dites « de grande culture » et des plantes maraîchères et aussi en arboriculture et dans la culture de la vigne.

De plus, il est montré dans les exemples que la composition minérale de formule (I) provoque aussi une modification du profil des populations bactériennes présentes dans le sol.

Une étude du profil des populations bactériennes par analyse de l'ADN ribosomique 16S par la technique d'électrophorèse sur gel en gradient dénaturant (DGGE pour « Denaturating Gradient Gel Electrophoresis ») a montré que l'ajout d'une composition de formule (I), quel que soit le type de sol étudié, induisait (i) un accroissement de l'abondance relative de certains taxons bactériens, ce qui est visualisé sur le gel d'électrophorèse par une augmentation de la densité relative de coloration d'une ou plusieurs bandes de migration et (ii) une réduction de l'abondance relative d'autres taxons bactériens, ce qui est visualisé par une réduction de la densité relative de coloration d'une ou plusieurs autres bandes de migration.

Ainsi, les résultats présentés dans les exemples montrent que la composition minérale de formule (I) provoque des modifications détectables importantes des rapports de prédominance des différents taxons bactériens, par rapport aux sols non traités par la composition minérale de formule (I).

Comme cela est illustré dans les exemples, lorsque l'on compare les profils de migration de bandes correspondant aux fragments d'ADNr 16S obtenus par DGGE, on montre que la composition minérale de formule (I) induit les changements les plus importants des profils de populations bactériennes dans les sols qui comprennent un environnement de flore et de faune complexe, en particulier dans les sols qui comprennent une couverture végétale et/ou des lombrics, étant entendu que l'effet de la composition de formule (I) s'accroît avec la complexité du sol qui est traité.

On a aussi réalisé une analyse par séquençage des fragments d'ADNr 16S correspondant à certaines bandes prédominantes en DGGE qui sont retrouvées respectivement dans chacun des différents sols de complexité biologique distincte, non traités ou traités avec une composition minérale de formule (I). Puis, à partir de l'information de séquence, on a déterminé la parenté phylogénétique des bactéries majoritaires correspondantes. Compte tenu du fait que de nombreuses bactéries telluriques ne sont pas cultivables et ne sont donc pas identifiables, la comparaison de nos séquences avec les données publiées n'a pas toujours abouti à une identification taxinomique. Toutefois, les résultats montrent que pour un sol (i) comprenant une couverture végétale sans lombrics et pour un sol (iii) sans couverture végétale et comprenant des lombrics, la composition minérale de formule (I) favorise la prédominance de populations bactériennes apparentées aux bactéries de la division TM7 qui sont retrouvées au niveau de la rhizosphère et dans les tourbières. De manière générale, il ressort de l'analyse après séquençage de l'ADNr 16S que l'ajout de la composition minérale de formule (I) induit de grandes modifications dans l'abondance relative des taxons bactériens, en favorisant le développement de certains et en freinant le développement d'autres, y compris de taxons bactériens qui sont majoritaires dans un sol identique mais non traité par la composition de formule (I). Dans tous les cas, la composition minérale de formule (I) provoque des modifications du profil des populations bactériennes dont l'importance croît avec la complexité biologique du sol. Illustrativement, des modifications de plus en plus importantes du profil des populations bactériennes induites par la composition de formule (I) sont observées, lorsqu'on passe d'un sol sans couverture végétale et sans lombric à un sol comprenant une couverture végétale et comprenant des lombrics.

Les résultats des exemples montrent donc que l'action de la composition minérale de formule (I) diffère, tant sur le plan quantitatif que qualitatif, en fonction du type d'environnement tellurique, notamment selon la présence ou l'absence d'une couverture végétale, et/ou selon la présence ou l'absence de lombrics.

De manière générale, les modifications du profil des activités enzymatiques et du profil des populations bactériennes qui sont induites par l'ajout d'une composition minérale de formule (I) constituent des indicateurs de l'accroissement de la fertilité d'un sol qui est illustré par l'accroissement qui a été observé de la production de biomasse végétale aérienne et racinaire.

La présente invention est en outre illustrée par les exemples suivants.

EXEMPLES

A. Matériels et Méthodes des exemples

A.1. Matériels

Le sol est un sol agricole prélevé dans la région de Tardenois (région de Picardie, France) de type limono-argileux. Les prélèvements des échantillons de sol ont été effectués de manière aléatoire. Le sol a ensuite été séché à température ambiante puis tamisé sur un tamis ayant une taille de maille de 2 mm.

La plante utilisée pour réaliser la couverture végétale du sol est un ray-grass, espèce très largement diffusée commercialement. On peut utiliser du ray-grass commercialisé par la société Jardiland (Logne, France)

Les vers de terre (lombrics) utilisés lors de cette expérimentation sont des vers anéciques appartenant à l'espèce *Nicodrilus giardi (également dénommée Allolobophora terrestris ou Aporrectodea terrestris).*

La composition minérale de formule (I) a été ajoutée à la dose équivalent à 200kg/ha dans chaque échantillon d'essai de terre, sauf dans les échantillons de terre témoins.

A.2. Réalisation des échantillons de terre témoins (microcosmes témoins) et des échantillons d'essai (mirocosmes d'essai).

Les microcosmes sont constitués de pots plastiques contenant chacun 1 kg de terre sèche. Celle-ci est réhumidifiée à sa capacité au champ.

Dans les pots concernés, les vers sont rajoutés à raison d'une biomasse de 6g/kg de terre sèche.

Un gramme de graine de ray-grass est utilisé pour ensemencer les pots concernés.

Les vers sont ajoutés aux pots lorsque les plantules de ray gras ont atteint une hauteur d'environs 5 cm.

L'expérimentation est constituée de trois répétitions (ou série) qui correspondent chacune à 8 modalités soit au total 24 microcosmes

Ces microcosmes sont placés à température ambiante (20 à 23°C°) pendant 1,5 mois. Après ce laps de temps, le ray-grass (partie aérienne et partie souterraine racinaire) est récolté puis placé à l'étuve pour la mesure du poids sec. Pour chaque pot, deux lots d'échantillons de sol sont prélevés afin de procéder aux analyses biochimiques et moléculaires.

**A.3. Analyses enzymatiques**

Un gramme de sol est remis en suspension dans 5 ml d'eau distillée à 4°C. Cette suspension constitue l'extrait brut pour les dosages enzymatiques.

**1. Dosages des hétérosidases (PNP)**

*Préparation des réactifs :*

- $Na_2CO_3$ : 2 gr sont dissous dans 100 mL d'eau distillée

- Substrat enzymatique :

Les solutions ont été réalisées à raison de 80 mg de substrat dissous dans 10 ml d'eau distillée

- 4-Nitrophenyl phosphate di(tri) Salt) (PNP-phosphate). Ce substrat permet de mettre en évidence l'activité des phosphatases enzymes intervenant dans la minéralisation du phosphate organique.
- 4-Nitrophenyl β-D-glucopyranoside (PNP-β-glucoside). L'hydrolyse de ce substrat permet de doser l'activité de la β-glucosidase qui intervient dans les étapes ultimes de la dégradation de la cellulose.
- 4-Nitrophenyl N-acetyl-β-D-glucosaminide (PNP N-acetyl-β-D-glucosaminide). La chitine est un substrat très largement répandu dans les sols et provient de la cuticule des arthropodes et entre dans la composition membranaire de nombreux champignons. La dégradation de ce substrat par les chitinases et la N-acetyl-glucosaminidase constitue une étape préalable à la libération des sucres aminés qui interviennent à la fois dans le cycle du carbone et de l'azote.
- 4-Nitrophenyl β-xyloside, (PNP-β-D-xyloside), est hydrolysé par la β-xylosidase qui intervient dans les dernières étapes de dégradation du xylane l'un des composants majeurs de la paroi des cellules végétales.
- 4-Nitrophenyl α-glucoside (PNP-α-D-glucoside). L'α-glucosidase qui hydrolyse ce substrat est l'une des enzymes intervenant dans la dégradation de l'amidon.

Ces solutions sont conservées à 4°C dans des fioles fumées.

- Tampon phosphate pH 5 : 24,3 ml d'acide citrique 0,1 M sont mélangés à 25,7 ml de $Na_2HPO_4$, $12H_2O$ à 0,2 M.

- Tampon Borate pH 9 : 10 ml d'HCl à 0,1 M sont mélangés à 90 ml de Borate de Sodium à 0.1 M

Les solutions de tampon sont conservées à 4°C

*Dosage en microplaques :*

Les dosages sont réalisés en microplaque. Pour chaque enzyme (phosphatase acide, phosphatase alcaline, β-glucosidase, α-glucosidase et β-xylosidase) un blanc, trois témoins substrats, trois témoins enzymes et trois essais sont réalisés de la manière suivante.

- Blanc : - 100 μl d'eau distillée

  - 25 μl de tampon Mac Ilvain pH 5 ou 9 selon l'enzyme dosée.

- Témoin substrat : - 50 μl d'eau distillée

  - 25 μl de tampon phosphate pH 5 ou borate pH 9 pour la phosphatase alcaline
  - 50 μl de substrat PNP

- Témoin enzyme : - 50 μl d'eau distillée

  - 25 μl de tampon Mc Ilvain pH 5 ou 9
  - 50 μl de solution enzymatique (terre)

- Essai - 50 μl de substrat PNP

  - 25 μl de tampon Mc Ilvain pH 5 ou 9
  - 50 μl de solution enzymatique (terre)

Ce dosage est réalisé dans une première plaque à fond conique et qui est incubée 2h dans une étuve à 37°C sous agitation.
Après l'incubation 75 μl de $NA_2CO_3$ à 2% sont ajoutés dans chaque puit.
La microplaque est ensuite centrifugée à 2500 tours/min pendant 10 min. Pour chaque puit, 50 μl de surnageant sont transférés dans une deuxième plaque dont les puits contiennent 250 μl de $NA_2CO_3$ à 2%. Après agitation manuelle, la microplaque est lue au spectrophotomètre à 405 nm contre le blanc.
A partir d'une gamme étalon effectuée préalablement, la relation entre la DO et la quantité de phénol est donnée par la formule suivante :

$$X \ (\mu g \ de \ phénol) = D.O. \ calculée \ x \ 1{,}14,$$

avec D.O. calculée = D.O. essai - (D.O. témoin substrat + D.O. témoin enzymatique)

L'activité enzymatique est définie comme la quantité de phénol libéré/gr de sol/h.

**2. Dosage de l'activité microbienne par la FDA (Fluorescéine Di Acétate)**

*Préparation des réactifs*

- FDA : 0,3 g de FDA dissous dans 10 ml d'acétone sont aliquotés dans des flacons en verre à raison de 1 ml par flacon. Cette solution conservée à -20°C constitue la solution mère..
  Cette solution mère est diluée extemporanément au 1/10$^{ème}$ avant de procéder aux dosages.
- Tampon phosphate pH 7 : 6,5 ml d'acide citrique à 0,1 M + 43,6 ml de $Na_2HPO_4,12H_2O$ à 0,2 M.

*Dosage en microplaques*

Les dosages sont réalisés en microplaque. Pour chaque dosage un blanc, trois témoins substrats, trois témoins enzymes et trois essais sont réalisés de la manière suivante.

- Blanc : - 150 $\mu$l d'$H_2O$

  - 50 $\mu$l de tampon phosphate pH 7

- Témoin enzyme : - 50 $\mu$l d'$H_2O$

  - 50 $\mu$l de tampon Mac Ilvain pH 7
  - 100 $\mu$l de sol

- Témoin substrat : - 100 $\mu$l d'$H_2O$

  - 50 $\mu$l de tampon Mac Ilvain pH 7
  - 50 $\mu$l de FDA (solution fille)

- Essai : - 100 $\mu$l de sol

  - 50 $\mu$l de tampon Mac Ilvain pH 7
  - 50 $\mu$l de FDA

La microplaque est placée à l'étuve à 37°C pendant 2 heures. Elle est ensuite centrifugée 10 minutes à 2500 tours/min.

Un volume de 100 $\mu$l du surnageant de chacun des puits est déposé dans les puits d'une seconde plaque à fond rond, où auront été déposés au préalable 100 $\mu$l de tampon Mac Ilvain pH 7 glacé (4°C). La lecture de la plaque .au spectrophotomètre est effectuée à une longueur d'onde de 490 nm contre le blanc.

Pour le FDA, l'activité enzymatique est exprimée en quantité de fluorescéine/gr de sol/h.

La réalisation d'une gamme étalon a permis d'établir la relation entre la DO et la quantité de fluorescéine ($\mu$g) selon la formule suivante :

$$X \ (\mu g \ de \ fluorescéine) = D.O. \ calculée \ * \ 0.086$$

**3. Analyses moléculaires**

Dans le but de séquencer les gènes de l'ADN ribosomique 16S spécifiques des populations bactériennes prédominantes et /ou d'intérêt pour les différents traitements appliqués au sol, les ADN ont été ré-extraits à partir des échantillons de sol contenus dans l'alcool.

### 3.1. Extraction de l'ADN du sol

La méthode choisie pour extraire l'ADN du sol repose sur l'utilisation d'un tampon CTAB (*Cetyl-Trimethyl-Ammonium Bromide*). 500 mg de chacun des 24 échantillons de sol (8 modalités : S, S+P, S+M, S+V, S+V+P, S+P+M, S+V+M, S+V+M+P x 3 répétitions) sont prélevés et mélangés à 1000 µL de tampon d'extraction CTAB, dans des tubes contenant des billes de céramique, de silice et de verre (Lysing Matrix E, MP Biomedicals). La lyse des cellules s'effectue à l'aide d'un homogénéisateur de type FastPrep-24 (MP Biomedicals) pendant 45 s à 6,5 m/s. Les échantillons sont ensuite incubés au bain marie à 65°C pendant 1H. L'extraction et la purification des acides nucléiques s'effectuent à l'aide de Phénol Chloroforme Isoamyl (24:24:1) et de Chloroforme Isoamyl (24:1), associés à des *Phase Lock Gel Tubes* (VWR). L'ADN est ensuite précipité au PEG *(Poly-Ethylene Glycol),* les culots lavés à l'éthanol 70° et repris dans 5OµL de tampon EB (*Tris HCl).* Les ADN extraits pour les 3 répétitions sont regroupés pour chacune des 8 modalités, de manière à avoir assez d'ADN pour les réactions subséquentes. L'ADN est ainsi quantifié et sa pureté évaluée (absence d'acides humiques, de protéines) au spectrophotomètre (Nanodrop).

### 3.2. Amplification des fragments d'ADNr 16S bactérien par PCR

Les PCRs (*Polymerase Chain Reactions*) sont effectuées en utilisant un thermocycleur de type TC-3000 (Techne) avec des amorces bactériennes universelles. Pour chacune des réactions, 0,25µM de chacune des amorces, 10µL de Tampon PCR 10X, 1,5mM de MgCl$_2$, 0,2mM de dNTPs (*deoxyNucleoside TriPhosphates),* 6U de Taq Polymérase (Invitrogen), 15-80ng d'ADN matrice et de l'eau stérile pour un volume final de 100µL sont ajoutés. Les amorces utilisées pour la PCR sont 518r (5'-ATT ACC GCG GCT GCT GG- 3' - SEQ ID NO 1) et GC-338f (5'-CGC CCG CCG CGC GCG GCG GGC GGG GCG GGG GCA CGG GGG GAC TCC TAC GGG AGG CAG CAG-3' - SEQ ID NO 2) et amplifient précisément la région variable V3 de l'ADN ribosomique 16S conservée chez les bactéries (environ 200pb). La séquence riche en GC (GC-clamp) attachée à l'extrémité 5' de l'amorce GC-338f empêche la complète dénaturation des doubles brins d'ADN pendant la séparation des fragments PCR par la DGGE. L'amplification par PCR débute par une dénaturation initiale à 94°C pendant 5min, suivie de 32 cycles de 1) dénaturation à 94°C pendant 30s, 2) hybridation à 54°C pendant 45s et 3) extension à 72°C pendant 1 min30. Elle se termine par une extension finale à 72°C pendant 20min.

### 3.3. Visualisation et quantification des produits PCR

Les produits de PCR sont déposés sur gel d'agarose 2% coloré avec du SYBR Safe (Invitrogen) à une concentration 1X. Les fragments PCR sont visualisés sur plaque UV et quantifiés à l'aide d'un marqueur de taille quantitatif, de type SmartLadder (Eurogentec).

### 3.4. DGGE

L'analyse DGGE (électrophorèse sur gel de polyacrylamide en présence d'un gradient d'agent dénaturant) est effectuée sur un système *DCode Universal Mutation Detection* (BioRad). Les échantillons de produits PCR (100µL, soit environ 500ng) sont chargés sur un gel de polyacrylamide 8% dans du TAE 0,5X (Tris-acide acétique-EDTA). Pour obtenir un gel de polyacrylamide présentant un gradient linéaire de dénaturation de 30-70%, 11,2mL d'une solution 0% (acrylamide 20mL, TAE 50X 2mL et H$_2$O qsp 100mL) et 4,8mL d'une solution 100% (acrylamide 20mL, TAE 50X 2mL, formamide 40mL, urée 42 g et H$_2$O qsp 100mL) sont mélangés pour la solution *Low* (30%) ainsi que 4,8mL de la solution 0% et 11,2mL de la solution 100% pour la solution *High* (70%). L'électrophorèse s'effectue à 60°C pendant 16H à 75V. Après migration, le gel est révélé dans un bain de bromure d'éthidium et photographié sous U.V. Les bandes d'intérêt sont découpées et prélevées à l'aide d'un scalpel.

3.5. Séquençage des bandes d'intérêt

L'ADN contenu dans les bandes est élué individuellement en faisant reposer les bandes découpées une nuit à 4°C dans 50µL d'eau ultra-pure. 2 µL d'éluât sont utilisés pour réamplifier les bandes individuellement par PCR selon le protocole décrit précédemment. De manière à vérifier la présence d'une bande unique dans chacun des produits PCR, les produits PCR sont déposés sur un gel de DDGE (gradient 30-50%) à côté de l'échantillon original. L'opération est répétée jusqu'à obtention d'une bande unique pour chaque produit PCR. Les produits de PCR purs sont ensuite envoyés pour séquençage (Gexbyweb, Genome Express).

**A.4. Analyses statistiques des profils des bandes de migration DGGE**

**1. Analyses graphique et statistique des profils**

La photographie du gel est récupérée et analysée grâce au logiciel Quantity One v4.6.5 (Biorad), permettant la détection automatique des bandes sur le profil DGGE. Une matrice binaire représentative des bandes du profil est mise en place de la façon suivante : la présence d'une bande est codée '1', son absence est codée '0', relativement aux bandes détectables dans tous les échantillons d'un même gel. A partir de cette matrice binaire, une matrice de distances est générée en utilisant un coefficient de similitude. Ici, le coefficient de Dice est utilisé ($S_{Dice} = 2N_{AB} / (N_A + N_B)$ où NA et $N_B$ sont respectivement le nombre de bandes des échantillons A et B, et $N_{AB}$, le nombre de bandes communes). La matrice de distances est ensuite analysée par une méthode de regroupement UPGMA (Unweighted Pairwise Grouping with Mathematical Average) et Neighbor Joining, permettant d'inférer un dendrogramme décrivant de manière graphique les distances entre tous les différents échantillons.

**2. Analyses moléculaire et phylogénétique des séquences**

Les chromatogrammes des séquences sont récupérés et visualisés avec le logiciel Chromas LITE version 2.01, permettant également une correction manuelle des séquences. Les séquences sont comparées à toutes les séquences disponibles dans les banques de données NCBI par analyse BLAST, qui rapatrie les séquences ayant les plus hauts scores d'identité avec les séquences testées. Une analyse supplémentaire d'assignation taxonomique est réalisée avec le Ribosomal Database Project II Classifier.

Les séquences obtenues sont ensuite alignées avec 47 séquences représentatives de la division bactérienne TM7, 2 séquences TM6, 2 séquences du Groupe I Termite, et 2 séquences de bactéries Green non-sulfur disponibles dans les bases de données NCBI, à l'aide du logiciel CLUSTALW. L'alignement (140pb) est corrigé manuellement avec le programme SEAVIEW. Un arbre de Neighbor Joining est finalement généré avec le logiciel MEGA4, avec 1000 répétitions de bootstrap.

**B. Résultats**

**Exemple 1 : Effet de la composition de formule (I) sur les activités enzymatiques des sols.**

L'ensemble des résultats de mesure des activités enzymatiques sont présentées sur la figure 1, respectivement pour : l'activité enzymatique globale (Fig. 1A), l'activité de la phosphatase acide (Fig. 1 B), l'activité de la phosphatase alcaline (Fig. 1 C), l'activité de la β-glucosidase (Fig. 1 D), l'activité de la β-xylosidase (Fig. 1E), l'activité de l'α-glucosidase (Fig. 1 F) et l'activité de la N-acétyl-glucosaminidase (Fig. 1 G).

*1.A/ En présence de sol*

Quelle que soit l'enzyme étudiée, aucune augmentation significative n'a été mise en évidence entre les sols sans couverture végétale et sans lombric, traités ou non avec la composition minérale de formule (I). De même, aucun effet délétère n'a été mesuré.

*1. B/En présence du sol et du ray-grass*

La dégradation du FDA n'est pas affectée par la présence de la composition minérale de formule (I). Les activités de la phosphatase acide, de la β-gtucosidase et de la N-acetyl-glucosaminidase en présence de la composition minérale de formule (I) sont supérieures à celles mesurées dans les contrôles. Cependant, en raison de la variabilité, les différences observées ne sont pas significatives au risque α de 5 %. En revanche, les activités de la phosphatase alcaline, de la α-xylosidase et de l'α-glucosidase sont augmentées de manière significative avec des facteurs de multiplication qui sont respectivement de 10, 4 et 4.

Ces résultats montrent qu'en présence d'une couverture végétale :

1°/ il existe un effet de la composition minérale de formule (I) sur l'activité enzymatique du sol
2°/ que cet effet porte sur des enzymes dont les activités étaient mineures en terme d'intensité.

*1.C/ En présence du sol et des vers de terre*

Lorsque la composition minérale de formule (I) est ajoutée à un sol en présence de vers (lombrics), deux enzymes présentent une augmentation significative de leur activité. Ces enzymes sont la β-xylosidase dont l'activité est multipliée par 6 et l'α-glucosidase qui d'une activité de 25 dans le contrôle passe à 112 Unité g de sol sec$^{-1}$ h$^{-1}$. Les activités des autres enzymes testées ne sont pas modifiées.

*1. D/ En présence de vers de terre et de ray-grass*

En présence de vers de terre et de ray-grass la composition minérale de formule (I) permet d'accroître d'un facteur 3 l'activité de la phosphatase alcaline, d'un facteur 1,5 l'activité de la β-glucosidase, d'un facteur 2,5 l'activité de la β-xylosidase et d'un facteur 4 l'activité de l'α-glucosidase.

*1. E/ Analyse en composantes principales*

Cette analyse a pour objectif de valider statistiquement la présence d'un effet de la composition minérale de formule (I) sur les activités enzymatiques du sol en fonction des différentes modalités testées (présence de plante et/ou de vers de terre...).

Le cercle des corrélations représenté sur la Figure 2A montre que l'axe 1 représentant 35% de la variance totale est défini par les activités de la phosphatase alcaline, de l'α-glucosidase, de la β-xylosidase et par la dégradation du FDA. L'axe 2, correspondant à 21% de la variance, est quant à lui décrit par les activités de la phosphatase acide, de la N-acetylglucosaminidase et de la α-glucosidase.

Comme représenté sur la Figure 2B, la projection des objets sur ces deux axes montre une opposition nette entre les traitements avec la composition minérale de formule (I) et les différents contrôles. Il existe donc bien un effet de la composition de formule (I) sur le profil enzymatique du sol testé.

Les résultats des mesures d'activités enzymatiques représentés sur les figures 1A à 1G sont décrits plus précisément dans le Tableau 1 à la fin de la présente description.. Dans le Tableau 1 :

- « S » signifie un sol sans couverture végétale et sans ver de terre,
- « S+M » signifie le sol « S » traité avec la composition minérale de formule (I),
- « S+V » signifie un sol sans couverture végétale et comprenant des vers de terre,
- « S+V+M» signifie un sol « S+V » traité avec la composition minérale de formule (I),
- « S+P » signifie un sol comprenant une couverture végétale sans ver de terre,
- « S+P+M » signifie un sol « S+P » traité avec la composition minérale de formule (I),
- « S+V+P » signifie un sol comprenant une couverture végétale et comprenant des vers de terre, et
- « S+V+P+M » signifie un sol « S+V+P » traité avec une composition minérale de formule (I).

Cette étude a permis de mettre en évidence de façon expérimentale que l'addition de la composition minérale de formule (I) permet d'accroître significativement la production de biomasse végétale.

On a aussi montré que l'ajout de la composition minérale de formule (I) permettant d'accroître le potentiel enzymatique du sol afin d'optimiser le processus de minéralisation de la matière organique a également été confirmée comme l'atteste l'analyse en composantes principales. Cependant, les résultats obtenus montrent que l'effet bénéfique de la composition minérale de formule (I) est dépendant

1 °/ de l'enzyme considérée. Ainsi les deux activités majeures à savoir celle de la phosphatase acide et de la β-glucosidase qui caractérisent ce sol ne sont pas les enzymes qui sont principalement influencées par la composition minérale de formule (I). En effet, cet effet bénéfique s'observe pour des enzymes mineures (mineures non pas pour leur importance dans le fonctionnement du sol mais en terme d'activité) telles que la β-xylosidase, l'α-glucosidase ou la phosphatase alcaline. Cela signifie que la composition minérale de formule (I) permet de « rééquilibrer » le profil enzymatique du sol sans engendrer de baisse des autres activités.

2°/ des modalités en présence. En effet, selon la modalité testée (présence ou absence de ray-grass/ver de terre) les réponses obtenues sont différentes. L'effet de la composition minérale de formule (I) est donc dépendant des organismes vivants (plantes/animaux). Ce résultat suggère très fortement que la composition minérale de formule (I) agit comme un catalyseur stimulant certaines activités biologiques du sol.

La mise en évidence d'une modification des profils enzymatiques du sol, notamment des voies de dégradation des agro-polymères de saccharides par la composition minérale de formule (I) pose alors la question de savoir si cette modification est subordonnée à une modification des communautés microbiennes. C'est l'objet de l'exemple 2 ci-dessous.

**Exemple 2: Effet de la composition minérale de formule (I) sur les Populations bactériennes du sol.**

Les analyses DGGE des fragments des gènes de l'ARNr 16S amplifiés par PCR, obtenus pour les 8 microcosmes ont été comparées pour visualiser les changements dans la diversité génétique des communautés bactériennes, suite aux différents traitements. L'inspection visuelle des profils DGGE révèle que le nombre de populations bactériennes n'est sensiblement pas modifié par les traitements appliqués au sol. Par contre, les populations microbiennes prédominantes ne semblent pas du tout être les mêmes selon les traitements appliqués au sol.

A/ Impact de la solution minérale PRP en présence de sol uniquement

Les résultats sont représentés sur la Figure 3

L'ajout de la composition minérale de formule (I) entraîne des modifications dans la structure des communautés bactériennes par rapport au sol seul (profil S). Les populations prédominantes du sol seul (en rouge) ne sont plus majoritaires dans le sol avec ajout de la composition (I) (les bandes disparaissent ou sont plus faibles). Cependant, la disparition/diminution d'intensité des bandes n'est pas toujours à interpréter comme la disparition des taxons concernés. En effet, elle peut simplement refléter le changement de densité relative entre populations, où l'augmentation de certaines populations peut en amener d'autres sous le seuil de détection de la DGGE. Dans le sol avec ajout de la composition (I), une population bactérienne est majoritairement représentée (en vert), bien que déjà présente dans le sol seul. Ceci peut suggérer soit un développement de cette population en présence de la composition (I), soit une régulation des populations qui étaient prédominantes dans le sol seul. Cette dernière hypothèse serait confirmée par le fait que le profil est plus homogène, en termes d'intensité des bandes, pour l'échantillon de sol traité avec la composition (I) qui agirait donc comme un modulateur

B/ Impact de la formulation minérale PRP en présence de ray-grass

Les résultats sont représentés sur la Figure 4.

En présence de ray-grass (profil S+P), la structure des communautés bactériennes est fortement modifiée par rapport au sol seul. Parmi les populations prédominantes, on peut observer une population largement majoritaire (bande 9) qui n'était pas détectée dans le sol seul.

En ajoutant la composition (I) en présence de ray-grass, on n'observe plus ces populations majoritaires. La bande E, qui apparaît comme la plus intense dans ce profil correspond à une population qui a pu soit être activée en présence de la composition (I), soit qui devient prédominante du fait de la régulation des populations qui étaient majoritaires en présence de ray-grass seulement.

Là encore, il apparaît donc clairement un effet modulateur de la composition (I) sur les communautés bactériennes du sol.

C/ Impact de la formulation minérale PRP en présence de vers de terre

Les résultats sont représentés sur la Figure 5.

En présence de vers de terre (profil S+V), les communautés bactériennes du sol semblent également être remaniées. Bien qu'un nombre important de bandes soit communes, la proportion relative des populations est fortement modifiée. On note en particulier la présence de trois populations majoritaires en présence de vers de terre (bandes 1, 4 et 7).

L'ajout de la composition (I) en présence des vers est à l'origine d'une structure des communautés encore différente. Si l'on retrouve des populations communes au profil S+V, leur proportion relative semble modifiée. En effet, les populations correspondant aux bandes A et 6 sont moins dominantes, et au contraire la population correspondant à la bande 3 devient majoritaire en présence de composition (I). Cette bande 3 ne correspond pas à la bande C détectée sur le profil S+V (voir séquences).

Bien qu'il existe des bandes intenses donc des groupes majoritaires, sur l'ensemble du profil en présence de la composition (I), on constate que l'effet PRP se traduit par une plus forte diversité des communautés microbiennes avec des densités relativement homogènes. Dans ce cas là aussi un effet modulateur de la composition (I) est observable même en présence de vers de terre.

D/ Impact de la formulation minérale PRP en présence de ray-grass et de vers de terre

Les résultats sont représentés sur la Figure 6.

L'association ray-grass et vers de terre (profil S+V+P) a un impact important sur les communautés bactériennes par rapport au sol seul (profil S). Les populations correspondant aux bandes D et 8 deviennent majoritaires. L'autre population majoritaire dans l'association vers/ray-grass, correspond à la bande 8.

L'ajout de la composition (I) en présence de ray-grass et de vers modifie fortement les communautés bactériennes. Les populations correspondant aux bandes D et 8 ne sont plus majoritaires et une autre population (en vert, séquence non obtenue) semble être activée directement par la composition (I) ou profiter de la régulation effectuée sur les autres populations. Dans ce cas de figure, l'effet modulateur de la composition (I) observé pour les autres modalités est moins marqué.

**Exemple 3: Spécificité de l'effet de la composition minérale de formule (I) sur les populations bactériennes majoritaires.**

L'analyse de similitude entre traitements a été effectuée en tenant compte à la fois de la présence des bandes (donc des communautés bactériennes) et de leur intensité (Fig. 7).

Cette analyse pouvait présenter deux cas de figures:

1 °/ l'effet de la composition (I) est peu marqué. Dans ce cas le profil bactérien d'un sol sans la composition (I) doit présenter une forte similitude avec le profil bactérien d'un sol identique traité avec la composition (I). Sur le dendrogramme de similitude représenté sur la Figure 7, ces deux modalités sont alors regroupées ou peu éloignées. 2°/ l'effet de la composition (I) est très significatif, et dans ce cas, les profils bactériens des sols traités avec la composition (I) présentent un faible coefficient de similitude avec les profils bactériens des mêmes sols non traités. Leurs positions respectives sur le dendrogramme sont alors relativement éloignées.

L'analyse représentée graphiquement sur la Figure 7 montre que le sol (S) et le sol seul traité avec la composition (I) (S+M) sont présents au niveau d'un même cluster. Cela signifie que la composition (I) sur un sol dépourvu de vers de terre et de plante entraîne des modifications relativement modérées en comparaison avec les autres traitements testés.

En revanche, l'effet de la composition (I) est très marqué en ce qui concerne le sol mis en présence de vers de terre et de ray-grass (S+V+P+M) puisque ce traitement est très éloigné de l'ensemble des autres traitement en particulier du traitement vers de terre/plante sans la composition (I) (S+V+P). Ceci est également observé dans le cas du sol mis en présence de ray-grass (S+P) puisque ce dernier est relativement éloigné du sol avec le ray grass et la composition (I) (S+P+M). Dans le cas du sol avec les vers de terre (S+V) par rapport au sol avec les vers de terre et la composition (I) (S+V+M) l'effet bien qu'indiscutable est cependant moins marqué.

**Exemple 4: Essai d'identification par séquençage des fragments d'ADNr 16S correspondant aux populations bactériennes majoritaires.**

A/ Présentation du gel DGGE ayant servi pour le séquençage

Le gel DGGE présenté sur la Figure 8 indique les différentes bandes qui ont été prélevées, purifiées puis séquencées. Ces bandes ont été choisies en raison de leur forte intensité relative dans le profil. On précise que certaines bandes majoritaires n'ont pu être séquencées en raison des nombreuses difficultés pour les purifier.

B / Comparaison des séquences des puits Sol (S) / Sol + PRP (S+M)

Dans le sol avec ajout de composition (I) (S+M), une population bactérienne est majoritairement représentée (bande 15). L'analyse BLAST rapproche la séquence de ce groupe à celle d'un taxon bactérien non cultivable, donc non identifiable morphologiquement (Numéro d'accession Genbank: EF 157158, pourcentage d'identité: 97%). Selon le *Classifier* RDPII (accessible notamment à l'adresse Internet suivante : «http://rdp.cme.msu.edu/classifier/classifier »), cette population s'apparente à la division bactérienne TM7 avec un taux d'assignation de 91%. Cette division, récemment décrite, a des membres distribués très largement dans l'environnement. Dans le sol, des bactéries TM7 ont ainsi été mises en évidence au niveau de la rhizosphère et dans des tourbières.

C/ Comparaison des séquences des puits sol + ray-grass (S+P)/ sol+ ray-grass + PRP S+P+M

Le séquençage de l'ADNr 16S de la bande 9 ne permet pas d'identifier cette population très largement majoritaire dans le sol en présence de ray-grass. En effet, la séquence la plus proche ramenée par l'analyse BLAST (numéro d'accession Genbank EU134275, 99% d'identité) correspond à un clone bactérien non identifié, provenant d'un sol de prairie (Tableau 2 ci-dessous).

En ajoutant la composition (I) en présence de ray-grass la bande E, apparaît comme la plus intense. Le séquençage de l'ADNr 16S indique que la séquence la plus proche correspond au numéro d'accession EU283406 (98% identité, population provenant d'une boue activée) (Voir Tableau 2 à la fin de la présente description). Selon le *Classifier* RDPII, cette population s'apparente à la division bactérienne TM7 avec un taux de assignation de 97%.

D/ Comparaison des séquences des puits sol + vers (S+V)/ sol + vers + PRP (S+V+M)

Concernant le sol en présence de ver (S+V) l'analyse moléculaire et l'assignation taxonomique montrent que les trois populations (bandes 1, 4, 7) s'apparentent à la division bactérienne TM7 (Séquences respectives les plus proches : AN EU283406, 98% identité ; AN AJ232811, 99% identité et AN AF269024, 99% identité) (Tableau 2). L'analyse phylogénétique (Figure 2) confirme cet apparentement. Bien que présentant une affinité avec la séquence DQ 828869 (98% d'identité) provenant d'un sol agricole, la population C n'a pas pu être rattachée à un groupe bactérien identifié à ce jour.

En présence des vers et de la composition (I) (S+V+M) on retrouve des populations communes au profil S+V, mais leur proportion relative semble modifiée. En effet, par exemple, la population correspondant à la bande A (idem 1, division TM7) est moins dominante en présence de la formulation minérale PRP. D'autre part, alors que les populations correspondant aux bandes 1, 4 et 7 étaient largement majoritaires sur le profil S+E, les populations dominantes sur le profil (S+E+M) sont celles correspondant aux bandes 6 (séquence la plus proche : AN AF269024, 99%, division TM7) et 3 (séquence la plus proche : AN AY820689, 99% d'identité, division TM7).

E/ Comparaison des séquences des puits sol + vers + ray grass (S+V+P)/ sol+ ver + ray-grass+PRP (S+V+P+M)

Dans l'échantillon S+V+P, il est intéressant de noter que la population correspondant à la bande D (prédominante dans le profil S+V+P) est la même (ou est très proche) que celles des bandes E (prédominante dans le profil S+P+M), 1 (prédominante dans le profil S+V) et A (prédominante dans le profil S+V+M), soit des bactéries apparentées à la division TM7. L'autre population majoritaire dans l'association vers/ray-grass (S+V+P) correspondant à la bande 8, n'a pu être identifiée moléculairement. La séquence la plus proche ramenée par BLAST est en effet un clone bactérien non identifié provenant de sols associés à des trembles (AN EF020305, 97% identité) et l'assignation taxonomique RDPII ne permet pas de rapprocher cette séquence à une division.

Dans l'échantillon avec la formulation minérale PRP (S+V+P+M), les populations correspondant aux bandes D et 8 ne sont plus majoritaires et une autre population (bande la plus intense) dont l'ADN n'a pu être purifié semble être activée directement par la solution minérale PRP ou profiter de la régulation effectuée sur les autres populations.

Les résultats de biologie moléculaire présentés dans les exemples montrent indiscutablement que ces modifications des activités enzymatiques sont liées à des changements des communautés microbiennes. Ceci confirme donc que la composition minérale de formule (I) a une action biologique. Mais cette action biologique dépend d'organismes tels que les plantes et les vers qui sont connus pour avoir un effet sur la microflore tellurique à travers les sphères d'influences qu'ils créent (rhizosphère et drilosphère). Les modifications des communautés microbiennes résultent donc d'un processus double, (i) la composition minérale de formule (I), d'une part, et (ii) de certains organismes, d'autre part.

**Exemple 5: Effets de la composition minérale de formule (1) sur la production de biomasse végétale.**

Les résultats sont représentés sur les figures 10A et 10B.

La production de ray-grass en présence de la composition minérale de formule (I) permet un doublement significatif de la biomasse en poids sec. En présence de ver de terre la même tendance est observée.

**Tableau 1 : Synthèse des résultats obtenus**

| | S | S+M | S+P | S+P+M | S+V | S+V+M | S+P+V | S+P+V+M |
|---|---|---|---|---|---|---|---|---|
| Biomasse | Ø | Ø | 0.89±0.03 | 1.49±0.08 | Ø | Ø | 0.42±0.01 | 0.85±0.05 |
| Phosphatase acide | 542.49±185.17 | 407.78±98.88 | 501.39±50.63 | 594.36±95.25 | 538.93±80.19 | 426.56±63.56 | 557.07±54.37 | 472.34±71.13 |
| Phosphatase alcaline | 102.48±23.87 | 110.47±15.89 | 7.22±6.49 | 68.36±31.22 | 89.92±14.66 | 99.56±61.99 | 20.54±24.76 | 55.04±31.79 |
| α-glucosidase | 42.61±39.62 | 103.75±35.52 | 16.23±8.13 | 68.61±9.32 | 28.41±16.23 | 113.52±18.64 | 25.49±26.99 | 105.27±61.00 |
| β-glucosidase | 454.21±106.98 | 512.81±35.09 | 445.96±180.41 | 624.93±84.91 | 554.41±86.25 | 620.37±77.86 | 415.14±38.06 | 613.14±97.36 |
| N-acetylglucosaminidase | 153.60±51.81 | 91.32±27.90 | 117.45±28.83 | 148.40±14.69 | 106.41±12.39 | 114.91±33.63 | 160.19±136.54 | 179.60±14.45 |
| β-xylosidase | 186.96±123.04 | 210.80±59.66 | 24.51±25.13 | 109.84±4.53 | 23.17±2.92 | 144.59±35.75 | 63.29±22.90 | 165.52±6.97 |
| FDA | 24.87±4.78 | 33.13±4.11 | 27.31±4.66 | 27.52±3.62 | 29.16±3.12 | 31.75±2.38 | 25.82±7.12 | 33.94±7.25 |

**Tableau 2**

| Bandes (s) | Séquences les plus apparentées | % identité | No d'Accès | Provenance initiale | Classification RDPII | Bootstrap Estimation de confiance * |
|---|---|---|---|---|---|---|
| 1, A, D, E | Bactérie non identifiée | 98% | EU283406 | activated sludge from membrane bioreactor | TM7 genera incertae sedis | 99% |
| C | Bactérie non identifiée | 98% | DQ828869 | agricultural soil from Switzerland | Unclassified bacterium | - |
| 3 | Bactérie non identifiée | 99% | AY820689 | drilling fluid, China | TM7 genera incertae sedis | 100% |
| 4 | Bactérie non identifiée | 99% | AJ232811 | rhizoplane of *Trifolium repens* | TM7 genera incertae sedis | 93% |
| 15 | Bactérie non identifiée | 97 % 97% | EF157158 | heavy oil seeps of the Rancho La Breatar pits | TM7 genera incertae sedis | 91% |
| 6, 7 | Bactérie non identifiée | 99% | AF269024 | full-scale sewage treatment plant | TM7 genera incertae sedis | 100% |
| 8 | Bactérie non identifiée | 97% | EF020305 | trembling aspen rhizosphere soil from an undisturbed mixed | Unclassified bacterium | - |
| 9 | Bactérie non identifiée | 99% | EU134275 | grass prairie preserve, Oklahoma | Unclassified bacterium | - |

## Revendications

1. Utilisation d'une composition minérale solide comprenant la formule (I) suivante :

| | |
|---|---|
| - Carbonate de calcium | de 4,58% à 77,8% |
| - Dolomie | de 3,85% à 69,29% |
| - Chlorure de sodium | de 5,7% à 12,4% |
| - Lignosulfate | de 4,25% à 8,49% |
| - Sulfate de potassium | de 0,37% à 2,44% |
| - Oxyde magnésium | de 0,01% à 0,07% |
| - Soufre élémentaire | de 0,009% à 0,066% |

les pourcentages ci-dessus consistant en les pourcentages en poids de chacun des composés, par rapport au poids total de matière sèche de ladite composition minérale,
pour accroître la fertilité d'un sol en provoquant l'augmentation d'au moins une activité enzymatique contenue dans ledit sol, choisie parmi (i) la phosphatase , (ii) la β-xylosidase, (iii) l'α-glucosidase et (iv) la β-glucosidase.

2. Utilisation selon la revendication 1, **caractérisée en ce que** ladite composition minérale solide provoque une augmentation d'au moins 1,5 fois, et avantageusement d'au moins deux fois l'activité enzymatique choisie parmi (i) la phosphatase alcaline, (ii) la β-xylosidase, (iii) l'α-glucosidase et la β-glucosidase.

3. Utilisation selon la revendication 1, **caractérisée en ce que** ladite composition minérale solide provoque une augmentation d'au moins deux fois l'activité phosphatase.

4. Utilisation selon la revendication 1, **caractérisée en ce que** ladite composition minérale solide provoque une augmentation d'au moins deux fois l'activité β-xylosidase.

5. Utilisation selon la revendication 1, **caractérisée en ce que** ladite composition minérale solide provoque une augmentation d'au moins deux fois l'activité α-glucosidase.

6. Utilisation selon la revendication 1, **caractérisée en ce que** ladite composition minérale solide provoque une augmentation d'au moins deux fois l'activité β-glucosidase

7. Utilisation selon la revendication 1, **caractérisée en ce que** ladite composition minérale provoque des modifications détectables des rapports de prédominance des taxons bactériens présents dans le sol, les uns par rapport aux autres.

8. Utilisation selon l'une des revendications 1 ou 2, **caractérisée en ce que** ladite composition minérale solide provoque une augmentation d'au moins 1,5 fois la production de biomasse végétale par ledit sol.

9. Utilisation selon l'une quelconque des revendications précédentes, **caractérisée en ce que** la composition minérale de formule (I) est ajoutée au sol à fertiliser à raison d'une quantité d'au moins 0,01 Kg par m$^2$, et jusque 0,10 kg/m$^2$, de préférence entre 0,02 et 0,04 kg/m$^2$.

**Claims**

1. Use of a solid mineral composition comprising the following formula (I):

| | |
|---|---|
| - Calcium carbonate | from 4.58% to 77.8% |
| - Dolomite | from 3.85% to 69.29% |
| - Sodium chloride | from 5.7% to 12.4% |
| - Lignosulphate | from 4.25% to 8.49% |
| - Potassium sulphate | from 0.37% to 2.44% |
| - Magnesium oxide | from 0.01% to 0.07% |
| - Elemental sulphur | from 0.009% to 0.066% |

the above consisting in the weight of each of the compounds, relative to the total weight of dry matter of said mineral composition,
for increasing the fertility of a soil by causing an increase in at least one enzymatic activity container in said soil, selected from (i) phosphatase, (ii) $\beta$-xylosidase, (iii) $\alpha$-glucosidase and (iv) $\beta$-glucosidase.

2. Use according to claim 1, wherein said solid mineral composition causes an at least 1.5-fold increase, and advantageously an at least 2-fold increase of the enzymatic activity selected from (i) alkaline phosphatase, (ii) $\beta$-xylosidase, (iii) $\alpha$-and $\beta$-glucosidase.

3. Use according to claim 1, wherein said solid mineral composition causes an at least 2-fold increase of the activity.

4. Use according to claim 1, wherein said solid mineral composition causes an at least 2-fold increase of the $\beta$-xylosidase activity.

5. according to claim 1, wherein said solid mineral composition causes an at least 2-fold increase of the $\alpha$-glucosidase activity.

6. Use according to claim 1, wherein said solid mineral composition causes an at least 2-fold increase of the $\beta$-glucosidase activity.

7. Use according to claim 1, wherein said composition causes detectable changes in the prevalence ratios the respective bacterial taxons in the soil.

8. Use according to claim 1 or wherein said solid mineral composition causes an at least 1.5-fold increase in the production of vegetation by said soil.

9. Use according to any of preceding claims, the compositions of formula (I) is to the soil to be in an amount of at least 0.01 kg per m$^2$, and up to 0.10 kg/m$^2$, in an amount ranging from 0.02 to 0.04 kg/m$^2$.

**Patentansprüche**

1. Verwendung einer festen Mineralzusammensetzung, die die folgende (I) umfasst:

| | |
|---|---|
| - Calciumcarbonat | 4,58% bis 77,8% |
| - Dolomit | 3,85% bis 69,29% |
| - Natriumchlorid | 5,7% bis 12,4% |
| - Lignosulfat | bis 8,49% |
| - Kaliumsulfat | 0,37% bis 2,44% |

(fortgesetzt)

| - Magnesiumoxid | 0,01% bis 0,07% |
| - elementarer Schwefel | 0,009% bis 0,066%, |

wobei die obigen Prozentangaben jeweils Gewichtsprozenten der Verbindungen entsprechen, bezogen auf das Gesamttrockengewicht der Mineralzusammensetzung,

zur Erhöhung der Fruchtbarkeit eines Bodens, indem man die Steigerung wenigstens einer in dem Boden erhaltenen enzymatischen Aktivität bewirkt, die aus (i) Phosphatase, (ii) β-Xylosidase, (iii) (α-Glucosidase und (iv) β-Glucosidase ausgewählt ist.

2. Verwendung anspruch 1, **dadurch gekennzeichnet, dass** die feste Mineralzusammensetzung Steigerung der enzymatischen Aktivität, die aus (i) Alkalischer Phosphatase, , (ii) β-Xylosidase, (iii) α-Glucosidase und β-Glucosidase ausgewählt ist, auf wenigstens das 1,5-fache und vorzugsweise das Zweifache bewirkt.

3. Verwendung gemäß Anspruch 1, **dadurch gekennzeichnet, dass** die feste Mineralzusammensetzung eine Steigerung der Phosphatase-Aktivität auf wenigstens das Zweifache bewirkt.

4. Verwendung gemäß Anspruch 1, **dadurch gekennzeichnet**, die feste Mineralzusammensetzung eine Steigerung der β-Xylosidase-Aktivität auf wenigstens das Zweifache bewirkt.

5. Verwendung gemäß Anspruch 1, **dadurch gekennzeichnet, dass** die feste Mineralzusammensetzung eine Steigerung der α-Glucosidase-Aktivität auf wenigstens das Zweifache bewirkt.

6. Verwendung anspruch 1, **dadurch gekennzeichnet**, die feste Mineralzusammensetzung eine Steigerung der β-Glucosidase-Aktivität auf wenigstens das Zweifache bewirkt.

7. Verwendung gemäß Anspruch 1, **dadurch gekennzeichnet**, die feste Mineralzusammensetzung nachweisbare Modifikationen der Prädominanzverhältnisse von im Boden vorhandenen Bakterientaxons zueinander bewirkt.

8. Verwendung gemäß einem der Ansprüche 1 oder 2, **dadurch gekennzeichnet, dass** die feste Mineralzusammensetzung eine Steigerung der Produktion der pflanzlichen durch den auf wenigstens das 1,5-fache bewirkt.

9. Verwendung gemäß einem der vorstehenden Ansprüche, **dadurch gekennzeichnet, dass** die Mineralzusammensetzung der Rezeptur (I) dem zu düngenden Boden in einer Menge von wenigstens 0,01 kg pro $m^2$ und bis zu 0,10 $kg/m^2$, vorzugsweise zwischen 0,02 und 0,04 $kg/m^2$, zugesetzt wird.

Figure 1A

Figure 1B

Figure 1C

Figure 1D

Figure 1E

Figure 1F

Figure 1G

Figures 2A (partie supérieure) et 2B (partie inférieure)

Figure 3

Figure 4

Figure 5

Figure 6

Figure 7

Figure 8

Figure 9

**Impacte de la formulation minérale PRP sur la production de biomasse**

Figure 10A

**Impact de formulation minérale PRP sur la production de biomasse en présence de vers**

Figure 10B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PLASSART, P.** *ISME 11th International Symposium on Microbial Ecology,* 20 Août 2006
- **ENWALL, K. et al.** *Applied and Environmental Microbiology,* 2005, vol. 71 (12), 8335-8343
- **GREMION, F.** *Thèse No. 2862, Ecole Polytechnique Fédérale de Lausanne,* 2003
- **LUEDERS, T. et al.** *Applied and Environmental Microbiology,* 2002, vol. 68 (5), 2484-2494


SEQUENCE LISTING

<110> PROCEDES ROLAND PIGEON

<120> Utilisation d'une composition minérale solide pour accroître le fertilite d'un sol de culture ou de prairie

<130> V928FR

<160> 2

<170> Patent In version 3.3

<210> 1
<211> 17
<212> DNA
<213> artificial sequence

<220>

<220>
<223> amorce

<400> 1
attaccgcgg ctgctgg          17

<210> 2
<211> 60
<212> DNA
<213> artificial sequence

<220>
<223> amorce

<400> 2
cgcccgccgc gcgcggcggg cggggcgggg gcacgggggg actcctacgg gaggcagcag          60